# EUROPÄISCHE PATENTANMELDUNG

(11) **EP 3 530 615 A1**
(43) Veröffentlichungstag der Anmeldung: **28.08.2019**
(21) Anmeldenummer: 18158825.2
(22) Anmeldetag: 27.02.2018
(51) Int. Cl.: C01B 25/28, C01B 25/34, C01B 37/00

(54) **MESOPORÖSES PHOSPHAT UND DESSEN HERSTELLUNG**

(71) Anmelder: Helmholtz-Zentrum Potsdam - Deutsches GeoForschungsZentrum GFZ Stiftung des Öffentlichen Rechts des Lands Brandenburg, 14473 Potsdam (DE)
(72) Erfinder: Hövelmann, Jörn-Erik, 14473 Potsdam (DE); Stawski, Tomasz, 14473 Potsdam (DE); Besselink, Rogier, 14473 Potsdam (DE); Benning, Liane, 14473 Potsdam (DE)
(74) Vertreter: Hertin und Partner Rechts- und Patentanwälte PartG mbB

(57) **Zusammenfassung**

Die Erfindung betrifft ein Syntheseverfahren zur Herstellung eines mesoporösen Phosphats wobei zunächst Kristalle der allgemeinen Formel M1 M2PO₄*xH2O bereit- oder hergestellt werden und diese anschließend thermisch und/oder vakuumgetrieben zersetzt werden. Außerdem betrifft die Erfindung ein mesoporöses Phosphat mit einer Porengröße von 2 nm bis 5 nm sowie die Verwendung eines solchen Phosphats.

## Beschreibung

### Stand der Technik

Mesoporöse Festkörper sind nach IUPAC Klassifikation poröse Materialien mit Porendurchmesser zwischen 2 nm und 50 nm und grenzen sich somit von mirkoporösen Materialien (Porendurchmesser < 2 nm) und makroporösen Materialen (Porendurchmesser > 50 nm) ab. Mesoporöse Festkörper können in einer Vielzahl von Anwendungen eingesetzt werden.

Auf dem Gebiet der nanostrukturierten Materialien mit hoher innerer Oberfläche und wohldefinierten Porengrößenverteilungen wird aufgrund der extrem breiten Anwendungsgebiete viel geforscht. Die möglichen Anwendungen liegen zum Beispiel in der Katalyse, Sorption, Gasmessung und Energiespeicherung. Es handelt sich außerdem um vielversprechende Materialien für unterschiedliche biomedizinische Anwendungen wie zum Beispiel Knochengewebszüchtung oder Wirkstoffabgabe.

Die gängigsten Methoden zur Herstellung mesoporöser Materialien beruhen auf der Verwendung von Templaten (zum Beispiel Tenside wie Cetyltrimethylammoniumbromid (CTAB)), die erst bei der Synthese in das Material eingebaut und anschließend durch chemisches Ätzen oder Erhitzen entfernt werden, um so eine starre poröse Struktur zu hinterlassen. Template sind also chemische Zusätze zur Strukturgebung. Solche Ansätze haben sich als erfolgreich erwiesen, um die Porengrößen, -formen und -verteilungen in einer Reihe von Materialien einschließlich Siliciumdioxid, Aluminiumoxid, Kohlenstoffen und Non-Silica Oxide, präzise zu kontrollieren. Allerdings sind Template zum Teil toxisch und müssen später wieder vollständig entfernt werden, was die Verfahren aufwendig und kostenintensiv macht.

Die Porenwände mesoporöser Materialien bestehen oft aus amorphem SiO₂ oder ähnlichen anorganischen Oxiden. Bekannte mesoporöse Silica sind z. B. MCM-41 und SBA-15. Ihre Synthese gelingt durch Templatverfahren, bei denen das SiO2-Gerüst um ein strukturdirigierendes Tensid aufgebaut wird.

Neben der Toxizität stellt die Verwendung von Templaten auch einen erheblichen Kostenfaktor dar, der die Maßstabsvergrößerung behindern kann. Darüber hinaus kann die vollständige postsynthetische Entfernung der Template schwierig sein und erfordert außerdem zusätzliche Energie- und Materialkosten. Hinzu kommt, dass die Abfälle, die bei der Synthese und Nachverarbeitung anfallen, oft toxisch sind und somit eine Belastung für die Gesundheit und die Umwelt darstellen. Daher ist die Herstellung von porösen Materialien durch einfache, kostengünstige und templatfreie Methoden sowohl für die wissenschaftliche Forschung als auch für die Technologieentwicklung von großem Interesse.

Ein Verfahren zum Induzieren von Porosität ohne die Verwendung von Templaten kann über die Kalzinierung einer Vorläuferphase erfolgen. In diesem Fall wird die Porosität durch den Verlust flüchtiger Gase (zum Beispiel H₂O, CO₂) erzeugt, die durch die strukturelle Zersetzung des Vorläufers beim Erhitzen entstehen. Zu den am häufigsten untersuchten Vorstufen gehören Metalloxalate, Hydroxide und Carbonate. Diese Vorläufer liefern jedoch ausschließlich poröse Einfach- oder Mischmetalloxide und erfordern außerdem hohe Kalzinierungstemperaturen (> 300° C).

Für verschiedene Anwendungen, insbesondere auf dem Gebiet der Biomedizin, ist es jedoch wünschenswert, Materialien auf Phosphatbasis aufgrund ihrer guten Biokompatibilität und Abbaubarkeit zu verwenden. Bisher gibt es im Stand der Technik keine templatfreien Methoden zur Herstellung mesoporöser Phosphate.

Es war daher Ziel der vorliegenden Erfindung ein mesoporöses Material herzustellen, wobei das Herstellungsverfahren nicht die Nachteile aus dem Stand der Technik aufweist und das mesoporöse Material eine hohe innere Oberfläche und eine wohldefinierte Porengrößenverteilungen aufweist.

### Beschreibung der Erfindung

Das der Erfindung zugrundeliegende Problem wird durch die unabhängigen Ansprüche gelöst. Besonders vorteilhafte Ausführungsformen finden sich in den Unteransprüchen.

In einer ersten Ausführungsform betrifft die Erfindung ein Syntheseverfahren zur Herstellung eines mesoporösen Materials, bevorzugt eines mesoporösen Phosphats umfassend die folgenden Schritte:
a) Bereitstellung von Kristallen mit der allgemeinen Struktur M1M2PO₄*xH₂O, wobei M1 divalente Kationen und M2 monovalente Kationen bezeichnen,
b) thermische und/oder vakuumgetriebene Zersetzung der Kristalle aus Schritt a).

Das entstehende Produkt ist ein mesoporöses Phosphat, das sich dabei bevorzugt mit der allgemeinen Struktur M1M2PO₄*yH₂O oder M1HPO₄ beschreiben lässt, wobei M1 divalente Kationen und M2 monovalente Kationen bezeichnet und y < x ist. Es war völlig überraschend, dass mit der beschriebenen Methode ein mesoporöses Phosphat hergestellt werden konnte, ohne dass der Einsatz von Templaten oder besonders hohen Temperaturen notwendig war.

Mesoporöses Phosphat und bevorzugt mesoporöses M1M2PO₄ beziehungsweise M1HPO₄ mit einem Großteil der Poren die einen Porendurchmesser von 2 nm bis 5 nm aufweisen, konnte bisher synthetisch nicht hergestellt werden. Für die Templat-basierten, mesoporösen Silikate (MCM, SBA) können im Stand der Technik die Porendurchmesser relativ präzise über einen Bereich von 2 - 10 nm eingestellt werden, wobei jeweils eine enge Porengrößenverteilung erzielt werden kann. Dies ist für mesoporöse Phosphate über die Synthese von Templat-freien Verfahren bisher nicht möglich. In der Literatur ist die Synthese von mesoporösen Phosphaten (hauptsächlich Calciumphosphate) in einigen wenigen Fällen bereits beschrieben worden. Jedoch geschah dies bisher durch kompliziertere meist Templat-basierte Verfahren mit den zuvor beschriebenen Nachteilen. Bei den Verfahren aus dem Stand der Technik konnte keine so enge Porengrößenverteilung erzielt werden. Durch die Erfindung ist dies nun erstmals möglich und zwar durch ein Verfahren, dass auch ein Scale up erlaubt.

Mit einem "Großteil der Poren" im Sinne der Erfindung ist ein Anteil von mindestens 50% am Gesamtporenvolumen, bevorzugt mindestens 70%, besonders bevorzugt mindestens 90% gemeint.

Die genaue Zusammensetzung des Endprodukts hängt sowohl von der Ausgangszusammensetzung des zu zersetzenden Kristalls ab, als auch von der Zersetzungstemperatur. Je nach Temperatur kann zusätzlich noch mehr oder weniger Kristallwasser (H₂O) in der Struktur verbleiben.

Die Struktur des M1M2PO₄*yH₂O beziehungsweise M1HPO₄ ist amorph, so dass die Atome keine geordnete Struktur bilden. Jedoch bleibt die äußere Form der ursprünglichen M1M2PO₄*xH₂O Kristalle erhalten. Es findet daher während der Zersetzung bevorzugt eine pseudoamorphe Umwandlung statt, die zur Porosität des Endprodukts führt.

In einer bevorzugten Ausführungsform der Erfindung sind die monovalenten Kationen bevorzugt ausgewählt aus der Gruppe umfassend NH₄⁺, K⁺, Rb⁺, Cs⁺ oder TI⁺.

In einer weiteren bevorzugten Ausführungsform der Erfindung werden Übergangsmetalle als divalente Kationen gewählt. Besonders bevorzugt sind die divalenten Kationen ausgewählt aus der Gruppe umfassend Mg²⁺, Ni²⁺, Zn²⁺, CO²⁺, Cd²⁺, Cr³⁺, Mn²⁺ oder VO²⁺.

Es ist besonders bevorzugt, dass x gleich 6 ist, sodass die Struktur M1M2PO₄*6H₂O lautet.

Der Zersetzungsprozess gemäß Schritt b) kann durch die folgende allgemeine Formel beschrieben werden:

M1M2PO₄*xH₂O(s) → M1M2PO₄*yH₂O(s) + (x-y) H₂O

Bevorzugt entsteht somit dabei ein mesoporöses Phosphat mit der Struktur M1M2PO₄*yH₂O, wobei y < x ist. Der NH₄-Struvit bildet einen Sonderfall, da bei der Zersetzung das NH₄⁺ Ion zu NH₃ und H⁺ umgewandelt wird. NH₃ ist ein flüchtiges Gas, das bei der Zersetzung entweicht. Nur das H⁺ Ion verbleibt in der Struktur. Bei allen NH₄-freien Varianten, wie z. B. auch der Kalium-Variante geschieht dies nicht und das monovalente Kation bleibt in der Struktur. Es entweicht in diesem Fall also nur das H₂O, so dass die Struktur des vollständig dehydrierten Produktes M1 M2PO₄ (z. B. MgKPO₄) entspräche.

Bei einem NH₄-Struvit als kristalliner Ausgangsstoff gemäß a) fällt zusätzlich NH₃ an, sodass die Formel hier wie folgt lautet:

MgNH₄PO₄*xH₂O(s) → MgHPO₄(s) + NH₃↑ + xH₂O↑

Für Kalium-Struvit als kristallinen Ausgangsstoff lautet die Formel:

MgKPO₄*6H₂O(s) → MgKPO₄*y(H₂O) + (6-y)H₂O

Der Fachmann weiß, nach welcher Formel die Reaktion für die jeweiligen Ausgangstoffe abläuft, ohne dabei selbst erfinderisch tätig zu werden.

Besonders bevorzugt werden als Kristalle in Schritt a) Struvit, Nickel-Struvit oder Magnesiumkaliumphosphat bereitgestellt beziehungsweise hergestellt.

Das erfindungsgemäße Verfahren ist demnach bevorzugt ein zweistufiges Syntheseverfahren durch welches die Porosität im Endprodukt erzeugt wird. Während des Zersetzungsschrittes findet eine Volumenreduzierung statt, die sich in der Porosität niederschlägt.

Durch das Syntheseverfahren entsteht ein mesoporöses Phosphat. Das Verfahren zeichnet sich insbesondere durch seine Einfachheit aus. So sind lediglich zwei Schritte, nämlich die Kristallisation und die anschließende Zersetzung, notwendig. Das Syntheseverfahren ist besonders vorteilhaft da es ohne die Verwendung von Templaten durchgeführt wird. Bei dem erfindungsgemäßen Verfahren handelt es sich somit um eine templatfreie Methoden, bei der keine besonders hohen Temperaturen notwendig sind. Durch das hier beschriebene Verfahren wird zunächst eine kristalline Struktur hergestellt oder bereitgestellt. Die anschließende Zersetzung entspricht einer Pseudomorphose, sodass die Kristallform zumindest teilweise erhalten bleibt und ein mesoporöses Endprodukt entsteht. Die Einfachheit der Lösung spricht für erfinderische Tätigkeit, insbesondere da sie kompliziertere Lehren ersetzt.

Der vorliegenden Erfindung betrifft somit eine einfache Strategie, die die formkontrollierte Synthese von mesoporösen Phosphaten mit großer Oberfläche mit wohldefinierten Porengrößenverteilungen bei außergewöhnlich niedrigen Temperaturen und ohne den Einsatz von Templaten ermöglicht.

Mesoporöse Materialien mit wohldefinierter Porengrößenverteilung und großer Oberfläche sind von großer technologischer Bedeutung und finden zahlreiche Anwendungen.

Es ist bevorzugt, dass die Zersetzung bei einer Temperatur von mind. 55° C stattfindet. Besonders bevorzugt ist eine Temperatur von 70° C bis 100° C, wobei eine Temperatur von 90° C sich als besonders vorteilhaft erwiesen hat. Auch Temperaturen oberhalb 100° C können zum Einsatz kommen. Ein Fachmann ist in der Lage, die Verfahrensbedingungen entsprechend anzupassen ohne dabei selbst erfinderisch tätig zu werden.

Außerdem bevorzugt ist, dass die Zersetzung unter Vakuum bei einem Druck von 1 bis 10⁻³ mbar stattfindet. Ein Fachmann auf dem Gebiet ist in der Lage Temperatur und Druck an die jeweiligen Bedingungen und zeitlichen Vorgaben anzupassen, ohne dabei selbst erfinderisch tätig zu werden.

Besonders bevorzugt handelt es sich bei den Kristallen die in Schritt a) bereitgestellt werden um Struvit-Kristalle.

Struvit ist ein wohlbekanntes Mineral, das bei Umgebungstemperatur und -druck leicht in Form von orthorhombischen Kristallen aus übersättigten wässrigen Lösungen ausfällt, gemäß der Reaktion der Formel:

Mg²⁺(aq) + HPO₄⁻²(aq) + NH₄⁺(aq) → MgNH₄PO₄*xH₂O(s)↓ + H⁺(aq)

Eine solche spontane Struvitfällung ist ein häufiges Problem in Abwasserbehandlungssystemen, wo es in Rohren, Pumpen und anderen Geräten harte Ablagerungen bilden kann. Die kontrollierte Ausfällung von Struvit wurde jedoch auch als möglicher Weg zur Entfernung und Rückgewinnung von Phosphor aus Abwässern vorgeschlagen. Dies ist besonders attraktiv, da Struvit als umweltfreundlicher Langzeitdünger wiederverwendet werden kann. Struvit ist auch die wichtigste zementöse Phase in Magnesiumphosphat-Bindemitteln, die für verschiedene Nischenanwendungen wie Knochenregeneration, schnelle Straßenreparatur und Immobilisierung nuklearer Abfälle von großem Interesse sind.

In einer weiteren bevorzugten Ausführungsform des Syntheseverfahrens werden die Ausgangskristalle hergestellt indem
- eine Salzlösung des divalenten Kations mit einer Lösung des Phosphatsalzes des monovalenten Kations gemischt wird,
- die so entstandene Suspension gefiltert wird und
- der Filterkuchen getrocknet wird.

Bei der Salzlösung des divalenten Kations handelt es sich um Lösungen aus zum Beispiel Magnesiumchlorid oder Nickelchlorid. Auch die jeweiligen Nitrat oder Sulfatverbindungen können eingesetzt werden, also zum Beispiel Magnesiumnitrat oder Nickelnitrat. Bei der Lösung des Phosphatsalzes des monovalenten Kations handelt es sich zum Beispiel Ammoniumphosphat oder Kaliumphosphat. Die Wahl des Ausgangsstoffs kann jeweils an die Anforderungen des Produkts angepasst werden.

Durch diesen ersten Schritt des zweistufigen Syntheseverfahrens wird ein homogener Kristall bereitgestellt.

Es ist bevorzugt, dass die Kristallherstellung bei einer Temperatur von Raumtemperatur bis circa 50° C erfolgt. Bei Temperaturen oberhalb von 50° C, bilden sich zu einem größeren Teil andere, weniger hydratisierte Phasen wie zum Beispiel Dittmarit (MgNH₄PO₄*1H₂O), welche aber ebenfalls in dem erfindungsgemäßen Verfahren zum Einsatz kommen können.

In einer bevorzugten Ausführungsform beruht das Syntheseverfahren auf der thermischen und/oder vakuumgetriebenen Zersetzung von Ammoniummagnesiumphosphat (MgNH₄PO₄*xH₂O), auch bekannt als Mineral Struvit.

In dieser Ausführungsform erfolgt bevorzugt in einem ersten Schritt die Synthese von Struvit durch Mischung einer Magnesiumchloridlösung (MgCl₂) mit einer Ammoniumphosphat-Lösung ((NH₄)₂HPO₄). Dieser Schritt findet bevorzugt bei Raumtemperatur beziehungsweise Temperaturen von unter 50° C statt. Aus der übersättigten Lösung fallen Struvitkristalle als weißer Niederschlag aus:

Mg²⁺(aq) + HPO₄⁻²(aq) + NH₄⁺(aq) → MgNH₄PO₄*xH₂O(s)↓ + H⁺(aq)

Besonders bevorzugt fällt dabei MgNH₄PO₄*6H₂O aus.

Die so entstandene Suspension wird anschließend gefiltert und der Filterkuchen getrocknet. Es ist bevorzugt, dass die Trocknung bei Raumtemperatur stattfindet. Nach der Trocknung liegen die Kristalle als feines, weißes Pulver vor. Die Korngröße liegt bevorzugt im Mikrometerbereich.

Im nächsten Schritt erfolgt die Zersetzung der Kristalle. Diese findet bevorzugt im Trockenschrank statt. Ab einer Temperatur von circa 55° C beginnt sich der kristalline Struvit unter Abgabe von Ammoniak und Wasser in amorphes Magnesiumhydrogenphosphat umzuwandeln:

MgNH₄PO₄*xH₂O(s) → MgHPO₄(s) + NH₃↑ + xH₂O↑

Dabei ist x bevorzugt gleich 6.

Die Geschwindigkeit des Zersetzungsprozesses steigt mit zunehmender Temperatur rasch an. Bei 70° C ist die Zersetzung nach circa 10 Stunden abgeschlossen, bei 100° C hingegen bereits nach weniger als einer Stunde. Es kann vorteilhaft sein, den Prozess mittels Vakuum weiter zu beschleunigen. Es war völlig überraschend, dass im Hochvakuum eines Elektronenmikroskops (< 10⁻³ mbar) eine rasche Zersetzung bereits bei Raumtemperatur zu beobachten war. Der Fachmann ist in der Lage Druck und Temperatur an die jeweiligen Vorgaben und Ausgangsmaterialien anzupassen und den Prozess zu steuern ohne dabei selbst erfinderisch tätig zu werden.

Besonders bevorzugt ist die Synthese eines mesoporösen Magnesiumphosphats. Magnesiumphosphate sind besonders für biomedizinische Anwendungen geeignet, da dieses Material eine ausgezeichnete Biokompatibilität besitzt und biologisch gut abgebaut wird.

Besonders bevorzugt handelt es sich bei dem Endprodukt um Magnesiumhydrogenphosphat mit der Summenformel MgHPO₄*yH₂O (wobei y < 6). Die Struktur ist amorph, so dass die Atome keine geordnete Struktur bilden. Jedoch bleibt die äußere Form der ursprünglichen Struvitkristalle erhalten. Es handelt sich demnach um eine pseudoamorphe Umwandlung. Magnesiumhydrogenphosphat gehört zu den gesundheitlich unbedenklichen Materialien und besitzt eine ausgezeichnete Biokompatibilität, weshalb es für den Einsatz in zahlreichen Anwendungen geeignet ist und vor allem auch auf dem Gebiet der Biomedizin eingesetzt werden kann.

Das erfindungsgemäße Syntheseverfahren für Magnesiumhydrogenphosphat ist den Herstellungsverfahren aus dem Stand der Technik überlegen, da die Verfahren aus dem Stand der Technik aufwändig sind und darüber hinaus weitere Nachteile aufweisen. So sind entweder besonders hohe Temperaturen notwendig oder es muss auf den Einsatz von nachteiligen Templaten zurückgegriffen werden.

Bei einer hohen Vergrößerung im Elektronenmikroskop zeigte sich, dass das Material (in diesem Fall Magnesiumhydrogenphosphat) aus kleinen, im Durchmesser circa 20 nm großen, kugelförmigen Untereinheiten aufgebaut ist. Der Raum zwischen diesen Nanokugeln ist leer was zu einer hohen Porosität und spezifischen Oberfläche führt.

Es ergibt sich eine hohe spezifische Oberfläche von bis zu 300 m²/g. Die Oberfläche der ursprünglichen Struvitkristallen liegt bei lediglich 1,5 m²/g. Die erzielte spezifische Oberfläche hängt im Wesentlichen von der Dauer der Hitzebehandlung ab. Bei 90° C ist nach 80 min die maximale Oberfläche von 300 m²/g erreicht. Je kürzer die Zeit, desto kleiner die Oberfläche. Bei 20 min sind es circa 160 m²/g und bei 10 min circa 30 m²/g. Ein Fachmann ist in der Lage die Parameter an die jeweiligen Vorgaben anzupassen ohne dabei selbst erfinderisch tätig zu werden.

Es ist bevorzugt, dass das mesoporöse Phosphat eine spezifische Oberfläche von 160 m²/g bis 300 m²/g aufweist. Bei höheren Temperaturen können auch Werte von über 300 m²/g erzielt werden.

Besonders bevorzugt ist ein mesoporöses Phosphat im Sinne der Erfindung mit einer sehr engen Porengrößenverteilung, bevorzugt im Bereich von 2 nm und 5 nm (Porendurchmesser). Es ist besonders bevorzugt, dass der Großteil der Poren bei 2,8 nm bis 3,5 nm, besonders bevorzugt bei circa 3,1 nm liegt.

Es ist besonders bevorzugt, dass die Poren mit einer Größe zwischen 2 nm und 5 nm einen Anteil von mindestens 50% am Gesamtporenvolumen ausmachen, bevorzugt mindestens 70%, besonders bevorzugt mindestens 90%.

Eine enge Porengrößenverteilung ist für viele Anwendungen besonders vorteilhaft, da dadurch Prozesse präziser gesteuert beziehungsweise kontrolliert werden können. In biomedizinischen Anwendungen erlaubt eine enge Porengrößenverteilung beispielsweise eine homogene Aufnahme von Wirkstoffen und deren Freisetzung über einen bestimmten Zeitraum. Die Größe der Poren hat einen entscheidenden Einfluss auf die Freisetzungsraten, d.h. eine enge Porengrößenverteilung ist für die Feinkontrolle z.B. bei der Wirkstoffbeladung und Wirkstofffreisetzungsgeschwindigkeit überaus wichtig. Das mesoporöse Material der Erfindung ist daher besonders vorteilhaft in einem breiten Anwendungsgebiet und vor allem der Biomedizin einsetzbar.

Das Porengesamtvolumen beträgt bevorzugt circa 0,3 cm³/g. Auch dieser Wert hängt maßgeblich von der Dauer der Hitzebehandlung ab. Z. B. kann bei 90° C - wiederum nach etwa 80 min - ein maximales Porengesamtvolumen von 0,3 cm³/g erreicht werden. In diesem Beispiel haben die Poren zwischen 2 nm und 5 nm einen Anteil von ca. 90% am Gesamtporenvolumen, ca. 98% an der Gesamtoberfläche und über 99% an der Gesamtzahl der Poren. Das Porengesamtvolumen kann auch größer als 0,3 cm³/g sein, wenn die Dauer der Hitzebehandlung und die Temperatur entsprechend angepasst werden.

Ein Vorteil des Verfahrens ist außerdem, dass sich Porosität und Oberfläche des Materials weiter gezielt einstellen lassen. Dies kann zum Beispiel durch Veränderung der Kristallsynthesebedingungen wie pH-Wert und Sättigungsgrad oder den Einbau weiterer Ionen (zum Beispiel Kalium) in den Vorläufer (zum Beispiel Struvit-Vorläufer) geschehen. Zudem lässt sich durch Variation dieser Parameter auch die äußere Form und/oder Größe der einzelnen Körner gezielt verändern.

Obwohl die Phasenübergänge und Kinetik der Struvit-Zersetzung bereits in einer Reihe von Studien untersucht wurden, fehlen detaillierte Einblicke in die strukturelle Entwicklung. Dieses Wissen kann jedoch von großem Wert sein, um die Leistung und Handhabung von Produkten auf Struvit-Basis zu optimieren und neue funktionelle Materialien zu entwickeln. Unter Verwendung einer Reihe bekannter Charakterisierungstechniken zeigen wir mit der vorliegenden Erfindung, dass die Zersetzung von kristallinem Struvit zu einer hochporösen Magnesiumphosphat-Nanostruktur führt, die die ursprüngliche 3D-Morphologie des Primärkristalls beibehält. Diese Nanostruktur ist unter anderem potentiell interessant für verschiedene biomedizinische Anwendungen, wie zum Beispiel die Entwicklung von Knochengewebe und die Wirkstoffabgabe, da Magnesiumphosphat eine weit verbreitete, nicht toxische Substanz ist, für die eine ausgezeichnete Biokompatibilität und Bioabbaubarkeit bekannt ist. Darüber hinaus zeigt unsere Arbeit, dass der vorliegende Ansatz eine einfache und kostengünstige Methode mit einem guten Scale-up-Potenzial ist, das auf die Synthese poröser Materialien für eine breitere Palette von Anwendungen erweitert werden kann. Die zementartigen Eigenschaften von Struvit eröffnen außerdem die Möglichkeit, größere Teile mit komplexeren und unregelmäßigeren äußeren Formen vorzufertigen. Darüber hinaus ist Struvit in seiner Zusammensetzung sehr variabel, da es eine Vielzahl von Substituenten innerhalb der M1M2PO₄*6H₂O-Struktur akzeptiert (M1: Mg²⁺, Ni²⁺, Zn²⁺, Co²⁺, Cd²⁺, Cr³⁺, Mn²⁺, VO²⁺; M2: NH₄⁺, K⁺, Rb⁺, Cs⁺, TI⁺;).

Das Verfahren beinhaltet bevorzugt die kontrollierte Raumtemperatursynthese eines kristallinen Struvitvorläufers (MgNH₄PO₄ *6H₂O), gefolgt von einer kontrollierten thermischen Zersetzung bei Temperaturen von bevorzugt zwischen 70° C bis 90° C.

In einer anderen bevorzugten Ausführungsform wird statt Ammonium Kalium als monovalentes Kation verwendet.

Mg²⁺(aq) + HPO₄⁻²(aq) + K⁺(aq) → MgKPO₄*6H₂O(s)↓ + H⁺(aq)

In dieser Ausführungsform wird nur Wasser abgegeben und das Kalium verbleibt in der Struktur.

In einer weiteren bevorzugten Ausführungsform betrifft die Erfindung die Verwendung eines erfindungsgemäßen mesoporösen Phosphats und/oder eines mesoporösen Phosphats das mit dem erfindungsgemäßen Verfahren hergestellt wurde in der Biomedizin. Besonders bevorzugt ist die Verwendung als Trägersubstanz für Wirkstoffe, zur Herstellung von Phosphatzement und/oder als Gerüst für die Regeneration von Knochengewebe.

Außerdem bevorzugt ist die Verwendung eines erfindungsgemäßen mesoporösen Phosphats und/oder eines mesoporösen Phosphats das mit dem erfindungsgemäßen Verfahren hergestellt wurde in Katalysatoren, Adsorptionsmedien und/oder Ionenaustauschern.

Auch für Gasmessungen oder zur Energiespeicherung kann das erfindungsgemäße mesoporöse Phosphat eingesetzt werden.

### Beispiel

Im Folgenden soll die Erfindung an Hand eines Beispiels erläutern werden ohne auf diese konkrete Ausführungsform beschränkt zu sein.

Es wird Struvit durch Mischung einer Magnesiumchloridlösung (MgCl₂) mit einer Ammoniumphosphat-Lösung ((NH₄)₂HPO₄) hergestellt. Im Beispiel wird dieser Schritt bei Raumtemperatur durchgeführt. Aus der übersättigten Lösung fallen Struvitkristalle als weißer Niederschlag aus:

Mg²⁺(aq) + HPO₄⁻²(aq) + NH₄⁺(aq) → MgNH₄PO₄*6H₂O(s)↓ + H⁺(aq)

Die entstandene Suspension wird anschließend gefiltert und der Filterkuchen getrocknet. Im Beispiel findet die Trocknung bei Raumtemperatur stattfindet. Es wird ein feines, weißes Pulver gewonnen.

Anschließend erfolgt die Zersetzung der Kristalle im Trockenschrank. Im Beispiel wird eine Zersetzungstemperatur von 90° C gewählt. Nach circa 80 Minuten hat sich der kristalline Struvit unter Abgabe von Ammoniak und Wasser in amorphes Magnesiumhydrogenphosphat umgewandelt:

MgNH₄PO₄*6H₂O(s) → MgHPO₄(s) + NH₃↑ + 6H₂O↑

Bei einer hohen Vergrößerung im Elektronenmikroskop zeigte sich, dass das Magnesiumhydrogenphosphat aus winzigen, im Durchmesser circa 20 nm großen, kugelförmigen Untereinheiten aufgebaut ist. Der Raum zwischen diesen Nanokugeln ist leer was zu einer hohen Porosität und spezifischen Oberfläche führt. Mittels N₂-Gasadsorption und Anwendung der Barrett-Joyner-Halenda (BJH)-Methode wurde eine enge Porengrößenverteilung im Bereich von 2 nm und 5 nm festgestellt, wobei der Großteil der Poren bei circa 3,1 nm Durchmesser liegt. Die Oberfläche wurde mit Hilfe der Brunauer-Emmett-Teller(BET-Methode) ermittelt. Es ergibt sich eine hohe spezifische Oberfläche von bis zu 300 m²/g.

Die Poren mit einem Durchmesser von zwischen 2 nm und 5 nm hatten einen Anteil von ca. 90% am Gesamtporenvolumen, ca. 98% an der Gesamtoberfläche und über 99% an der Gesamtzahl der Poren.

### Figuren

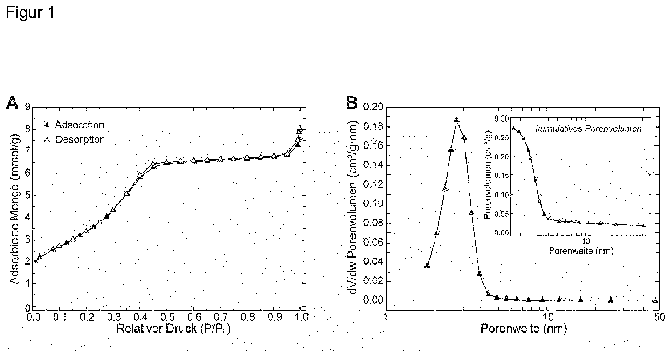

Figur 1A zeigt die Sorptionsisotherme (gemessen bei 77 K)für das im Beispiel hergestellte Magnesiumhydrogenphosphat (Zersetzung bei 90°C für eine Dauer von 80 min). Die daraus mittels BJH-Methode ermittelte Porengrößenverteilung (Fig. 1B) zeigt, dass die Porengrößen im unteren Bereich der Mesoporenskala, also 2 nm bis 50 nm, liegen. Es handelt sich demnach um ein mesoporöses Material. Bemerkenswert ist, dass eine sehr enge Porenverteilung vorliegt. Das Größenspektrum der Poren (effektiver Porendurchmesser) umfasst dabei lediglich einen kleinen Bereich zwischen 2 nm und 5 nm, wobei der Großteil der Poren bei circa 3,1 nm liegt. Dies lässt darauf schließen, dass es sich um annährend zylindrische Porenkanäle handelt. Das Porengesamtvolumen beträgt circa 0,28 cm³/g (siehe Einschub in Fig. 1B; kumulatives Porenvolumen).

## Patentansprüche

1. Syntheseverfahren zur Herstellung eines mesoporösen Phosphats umfassend die folgenden Schritte:
a) Bereitstellung von Kristallen mit der allgemeinen Struktur M1M2PO₄·xH₂O, wobei M1 monovalente Kationen und M2 divalente Kationen bezeichnen,
b) thermische und/oder vakuumgetriebene Zersetzung der Kristalle aus Schritt a).

2. Syntheseverfahren nach Anspruch 1,
wobei die Zersetzung bei einer Temperatur von mind. 55° C, bevorzugt einer Temperatur von 70° bis 100°C, besonders bevorzugt bei 90° C stattfindet.

3. Syntheseverfahren nach Anspruch 1 oder 2,
wobei die Zersetzung unter Vakuum bei einem Druck von 1-10⁻³ mbar stattfindet

4. Syntheseverfahren nach mindestens einem der vorhergehenden Ansprüche,
wobei zur Bereitstellung der Kristalle
• eine Salzlösung des divalenten Kations mit einer Lösung eines Phosphatsalzes des monovalenten Kations gemischt wird,
• die so entstandene Suspension gefiltert wird und
• der Filterkuchen getrocknet wird.

5. Syntheseverfahren nach mindestens einem der vorhergehenden Ansprüche, wobei die Herstellung der Kristalle bei einer Temperatur zwischen Raumtemperatur und 50° C erfolgt.

6. Syntheseverfahren nach mindestens einem der vorhergehenden Ansprüche, wobei das Verfahren ohne die Verwendung von Templaten durchgeführt wird.

7. Syntheseverfahren nach mindestens einem der vorhergehenden Ansprüche, wobei eine pseudomorphe Umwandlung stattfindet.

8. Syntheseverfahren nach mindestens einem der vorhergehenden Ansprüche, wobei das mesoporöse Phosphat Magnesiumhydrogenphosphat ist.

9. Mesoporöses Phosphat der allgemeinen Struktur M1M2PO₄*yH₂O oder M1HPO₄, wobei y < x und wobei mit Poren mit einer Porengröße von 2 nm bis 5 nm einen Anteil von mindestens 50% am Gesamtporenvolumen ausmachen, bevorzugt mindestens 70%, besonders bevorzugt mindestens 90%.

10. Mesoporöses Phosphat nach dem vorhergehenden Anspruch, hergestellt mit einem Verfahren nach mindestens einem der Ansprüche 1 - 8.

11. Mesoporöses Phosphat nach mindestens einem der Ansprüche 9 oder 10, wobei das Phosphat in einer amorphen Struktur vorliegt.

12. Mesoporöses Phosphat nach mindestens einem der Ansprüche 9 - 11, wobei das mesoporöse Phosphat eine spezifische Oberfläche von bis zu 300 m²/g aufweist.

13. Mesoporöses Phosphat nach mindestens einem der Ansprüche 9 - 12, wobei das Porengesamtvolumen bei bis zu 0,3 cm³/g liegt.

14. Verwendung eines mesoporösen Phosphats hergestellt nach mindestens einem der Ansprüche 1 - 8 und/oder gemäß mindestens einem der Ansprüche 9 - 13 in Katalysatoren, Adsorptionsmedien, Ionenaustauschern, als Trägersubstanz für Wirkstoffe, zur Herstellung von Phosphatzement, als Gerüst für die Regeneration von Knochengewebe.
